# EUROPÄISCHE PATENTSCHRIFT

(11) **EP 2 948 691 B1**
(45) Veröffentlichungstag und Bekanntmachung des Hinweises auf die Patenterteilung: **08.05.2019**
(21) Anmeldenummer: 14701374.2
(22) Anmeldetag: 24.01.2014
(51) Int. Cl.: F16D 65/18

(54) **SCHEIBENBREMSE FÜR EIN NUTZFAHRZEUG**
DISK BRAKE FOR A UTILITY VEHICLE
FREIN À DISQUE POUR VÉHICULE UTILITAIRE

(30) Priorität: 25.01.2013 DE 102013100788
(43) Veröffentlichungstag der Anmeldung: 02.12.2015
(73) Patentinhaber: KNORR-BREMSE Systeme für Nutzfahrzeuge GmbH, 80809 München (DE)
(72) Erfinder: ASEN, Alexander, 94428 Eichendorf (DE)
(86) Internationale Anmeldenummer: PCT/EP2014/051404
(87) Internationale Veröffentlichungsnummer: WO 2014/114749

(56) Entgegenhaltungen:
- WO-A1-2018/024712
- DE-A1- 10 304 713
- DE-A1-102007 007 493
- DE-A1-102010 019 472
- DE-B3-102006 029 428

## Beschreibung

Die Erfindung betrifft eine Scheibenbremse für ein Nutzfahrzeug gemäß dem Oberbegriff des Anspruchs 1.

Eine derartige Scheibenbremse ist aus der WO 96/34216 A1 bekannt. Darin ist ausgeführt, dass zum Schutz des Innenraumes einer Aufnahmekammer, in der Funktionsteile des Bremssattels, wie eine Traverse und darin gehaltene Bremsstempel einer Zuspanneinrichtung oder dergleichen, aufgenommen sind, eine der Bremsscheibe zugewandte Montageöffnung durch eine Verschlussplatte verschlossen ist. Darüber hinaus dient die Verschlussplatte als Tragteil diverser Anbauten, wie Faltenbälgen oder Dichtungen.

Um auftretende Funktionsbelastungen, insbesondere solche, die sich aus der Abstützung einer Druckfeder ergeben, mit der die in der Aufnahmekammer angeordnete Traverse bei einem Lösen der Bremse in eine Ausgangsstellung zurückdrückbar ist, aufnehmen zu können, muss die Verschlussplatte entsprechend dimensioniert sein. Dies vor allem, um deren Verformung zu verhindern, die ansonsten die Funktionsfähigkeit der Scheibenbremse insgesamt beeinträchtigen könnte.

Bei einer Betätigung der Bremse, also einem Verschwenken eines an der Traverse einerseits und dem Rücken des Bremssattels andererseits anliegenden Bremshebels, wird die Traverse und werden damit die Bremsstempel gegen den Bremsbelag und in der Folge dieser gegen die Bremsscheibe gepresst, woraufhin bei einem als Schiebesattel ausgebildeten Bremssattel aufgrund der auftretenden Reaktionskräfte der Bremssattel unter Mitnahme eines reaktionsseitigen Bremsbelages in Richtung der Bremsscheibe verfährt, bis beide Bremsbeläge bremsend an der Bremsscheibe anliegen.

Mit der genannten Dickendimensionierung der Verschlussplatte ist allerdings ein relativ hohes Gewicht verbunden. Grundsätzlich gehen Forderungen dahin, gewichtsoptimierte Fahrzeugkomponenten einzusetzen, um so eine Verbesserung der Wirtschaftlichkeit des Fahrzeuges zu erreichen. Insbesondere durch steigende Kraftstoffpreise sowie ein verstärktes Umweltbewusstsein ist der Wunsch nach einer höheren Effizienz beim Transport von Gütern besonders ausgeprägt.

Zur diesbezüglichen Betriebskostenminimierung trägt maßgeblich die Reduzierung des Eigengewichts des Fahrzeuges bei, da mit geringem Eigengewicht mehr Nutzlast befördert werden kann, wodurch die Betriebskosten insgesamt gesenkt und die Umweltbelastungen durch geringeren Kraftstoffverbrauch reduziert werden.

Zu einer Gewichtsoptimierung trägt jedes entsprechend modifizierte Bauteil bei, wobei die bekannte Verschlussplatte dieser Forderung nicht entspricht.

Zum Schutz der in der Aufnahmekammer positionierten Funktionsteile vor Witterungseinflüssen, d.h., vor Schmutz und/oder Feuchtigkeit, ist die Verschlussplatte gegenüber dem Bremssattel abgedichtet, wozu Dichtmittel, beispielsweise in Form einer umlaufenden Dichtschnur zwischen der Verschlussplatte und einer die Montageöffnung des Bremssattels umgebenden Anlagefläche vorgesehen ist, die beim Befestigen der Verschlussplatte derart gequetscht wird, dass sich eine insgesamt dichte Anlage ergibt.

Dabei erfolgt die Anpressung, gleichzeitig aber auch die Befestigung der Verschlussplatte am Bremssattel mittels Schrauben, die im Randbereich umfänglich angeordnet und in den Bremssattel eingedreht sind.

Jedoch ist diese Art der Befestigung, die das Einbringen von Gewindebohrungen in den Bremssattel sowie ein drehmomentüberwachtes Anziehen der Schraube einschließt, sehr zeitaufwendig und daher kostenintensiv und steht einer fertigungstechnischen Optimierung entgegen.

Der Forderung nach einer einfachen und schnellen Herstellung der als Serienteile in großen Stückzahlen hergestellten Scheibenbremsen werden die bekannten konstruktiven Lösungen nicht gerecht.

Hierzu zählt auch, dass aufgrund der vorherrschenden engen Platzverhältnisse die Montage der Verschlussplatte, vor allem deren Befestigung durch Verschrauben, umständlich und aufwendig ist.

Daneben besteht durch das relativ einfache Lösen der Verschraubung die Gefahr eines unautorisierten Eingriffs in die Aufnahmekammer und damit eines Zugriffs auf die Funktionsteile, so dass diese relativ leicht manipulierbar sind und durch qualitativ minderwertige Nachahmerprodukte ersetzt werden können

Naturgemäß kann dadurch die Betriebssicherheit der Scheibenbremse herabgesetzt werden, was aus naheliegenden Gründen zu erheblichen Problemen führen kann.

Um hier Abhilfe zu schaffen, ist in der DE 10 2010 019 472 A1 vorgeschlagen, den Verschlussdeckel stoffschlüssig mit dem Bremssattel zu verbinden.

Abweichend von der Gattung ist in der DE 10 2007 007493 A1 eine Scheibenbremse offenbart, deren Verschlussplatte nicht stoffschlüssig, sondern mittels Schrauben am Bremssattel befestigt ist. Diese Verschlussplatte weist im Übrigen im Überdeckungsbereich einer Druckfeder auf der der Druckfeder gegenüberliegenden Seite Erhebungen auf.

Der Erfindung liegt die Aufgabe zugrunde, eine Scheibenbremse der gattungsgemäßen Art so weiterzuentwickeln, dass sie einfacher und kostengünstiger herstellbar ist, ihre Betriebssicherheit verbessert wird und sie zu einer Betriebskostensenkung beiträgt.

Diese Aufgabe wird durch eine Scheibenbremse mit den Merkmalen des Anspruchs 1 gelöst.

Durch die stoffschlüssige Verbindung des Verschlussdeckels mit dem Bremssattel ist ein Öffnen der Aufnahmekammer für einen Zugriff auf die einliegenden Funktionsteile der Scheibenbremse nur durch Zerstörung des Stoffschlusses möglich, die dazu führen kann, dass die Bremse nicht mehr einsatzfähig ist und ausgetauscht werden muss. Damit ist eine wesentliche Verbesserung der Betriebssicherheit der Scheibenbremse insgesamt gegeben.

Darüber hinaus sind wesentliche vorbereitende Arbeiten vor einer Montage des Verschlussdeckels, wie sie beim Stand der Technik beispielsweise durch das Einbringen von Gewindebohrungen in den Bremssattel zwingend notwendig sind, in diesem Umfang nicht mehr erforderlich.

Bevorzugt erfolgt die stoffschlüssige Verbindung der Verschlussplatte mit dem Bremssattel durch Kleben, wozu beispielsweise im Bremssattel eine umlaufende Nut in dem die Montageöffnung umgebenden Randbereich vorgesehen sein kann, in die dann ein insoweit portionierter Klebstoff eingebracht wird. Denkbar ist aber auch, die Verklebung vollflächig vorzunehmen, d.h., im vollständigen Auflagebereich der Verschlussplatte am Bremssattel, wodurch das genannte unautorisierte Öffnen der Aufnahmekammer besonders erschwert wird.

Neben der Verbindungsfunktion erfüllt die Verklebung der Verschlussplatte mit dem Bremssattel auch eine Dichtfunktion, da bei geeigneter Auswahl des Klebers und umfänglich ununterbrochener Anlage an beiden zu verbindenden Bauteilen auf eine separate Dichtung verzichtet werden kann.

Naturgemäß trägt der nun mögliche Verzicht auf entsprechende Bearbeitungsschritte ebenfalls zu einer Minimierung der Fertigungskosten bei.

Gemäß der Erfindung ist weiterhin vorgesehen, die Verschlussplatte im Anlagebereich der Druckfeder, die sich einerseits an der Verschlussplatte und andererseits an der Traverse abstützt, ein Verstärkungselement vorzusehen, das bevorzugt außenseitig, also auf der der Aufnahmekammer abgewandten Seite der Verschlussplatte angebracht ist. Zur Befestigung des vorzugsweise aus Blech bestehenden Verstärkungselements sind Schrauben vorgesehen, mit denen das Verstärkungselement, unter Durchtritt von Löchern, gegebenenfalls auch in der Verschlussplatte mittels Schrauben mit dem Bremssattel verbunden ist.

Damit wird der Bereich der Verschlussplatte in ausreichendem Maße im Sinne einer Aufdoppelung verstärkt, der durch die beim Bremsen über die Druckfeder auf die Verschlussplatte einwirkende Kraft besonders beansprucht wird. D.h., die übrigen, vornehmlich benachbarten Bereiche der Verschlussplatte unterliegen einer solchen Beanspruchung nicht, so dass die Verschlussplatte insgesamt dünner dimensioniert werden kann als bisher.

Damit wird der bereits erwähnten Forderung nach einer Gewichtseinsparung in vollem Umfang Rechnung getragen, wobei durch die Wanddickenreduzierung der Verschlussplatte, auch unter Berücksichtigung des Materialeinsatzes des Verstärkungselementes insgesamt eine kostensenkende Materialeinsparung erreicht wird, die insoweit von besonderer Bedeutung ist, als es sich bei Bauteilen für Scheibenbremsen um Serienteile handelt, die in großen Stückzahlen hergestellt und eingesetzt werden.

Ebenso wie die Verschlussplatte kann auch das Verstärkungselement als Blechform-Stanzteil hergestellt sein, so dass sich die Erfindung im Wesentlichen kostenneutral realisieren lässt. Hierzu trägt im Übrigen auch bei, dass lediglich zur Befestigung des Verstärkungselements Schrauben erforderlich sind, wohingegen auf deren Einsatz zur Verbindung der Verschlussplatte mit dem Bremssattel verzichtet werden kann.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt einer Scheibenbremse nach der Erfindung in einer perspektivischen Ansicht
- Figur 2: eine Verschlussplatte der Scheibenbremse als Einzelheit, ebenfalls schaubildlich dargestellt.

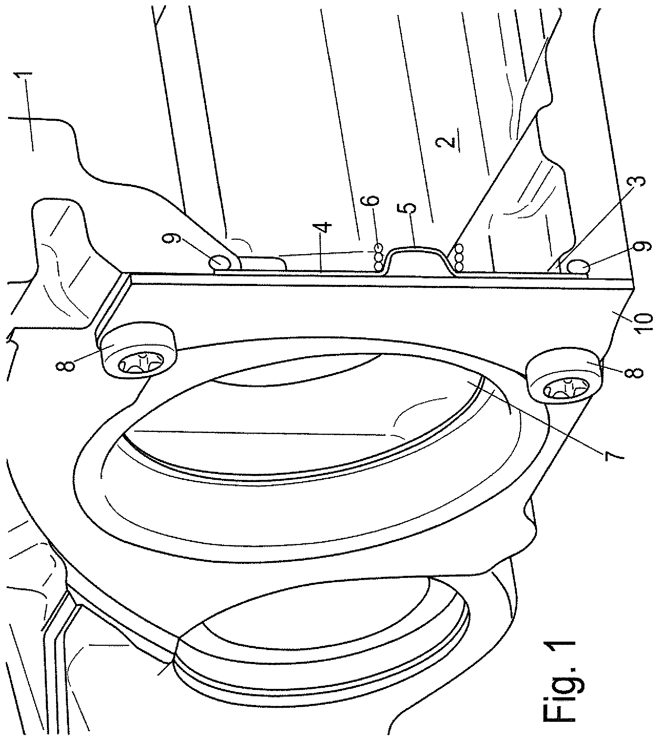

In der Figur 1 ist ein Bremssattel 1 einer Scheibenbremse für ein Nutzfahrzeug dargestellt, der eine Aufnahmekammer 2 für Funktionsteile wie einer nicht dargestellten Zuspanneinrichtung mit einer über einen Bremshebel betätigbaren Traverse und darin gelagerten Stellspindeln aufweist.

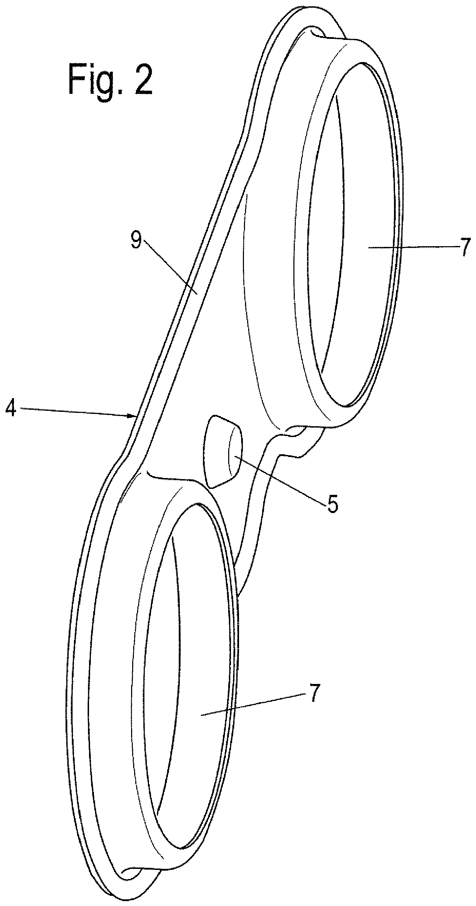

Eine Montageöffnung 3 der Aufnahmekammer 2 ist durch eine Verschlussplatte 4 verschlossen, die mit zwei Durchtrittsöffnungen 7 (Figur 2) versehen ist, zur Durchführung der Stellspindeln, mit denen bei Betätigung der Zuspanneinrichtung ein Bremsbelag an eine Bremsscheibe pressbar ist.

Die Verschlussplatte 4 weist etwa mittig, also zwischen den beiden Durchtrittsöffnungen 7 einen zur Aufnahmekammer 2 hin gerichteten ausgestülpten Zentrierdom 5 auf, der in eine Druckfeder 6 in Form einer Schraubenfeder ragt und der ein seitliches Auslenken der Druckfeder 6 verhindert. Dabei stützt sich die Druckfeder 6 einerseits an der Verschlussplatte 4 und andererseits an der nicht dargestellten Traverse ab.

Gemäß der Erfindung ist die Verschlussplatte 4 stoffschlüssig, im Beispiel durch Verkleben, mit dem Bremssattel 1 verbunden. Dazu ist, wie insbesondere die Figur 2 sehr deutlich wiedergibt, am äußeren Rand der Verschlussplatte 4 umlaufend ein Klebwulst 9 vorgesehen, der in eine gleichfalls umlaufende Nut des Bremssattels 1 eingepresst ist, wodurch gleichzeitig eine Dichtung der Montageöffnung 3 gewährleistet ist.

Zur Aufnahme der durch den Druck der Druckfeder 6 beim Bremsen wirksamen Kräfte ist ein den Anlagebereich der Druckfeder 6 überdeckendes Verstärkungselement 10 vorgesehen, das außenseitig an dem entsprechenden Bereich der Verschlussplatte 4 anliegt und das mittels Schrauben 8 mit dem Bremssattel 1 verbunden ist.

Das Verstärkungselement 10, das aus einem planebenen Blech besteht, überragt die Verschlussplatte 4 ober- und unterseitig, wobei diese so weit in den Bremssattel 1 eingelassen ist, dass das Verstärkungselement 10 sowohl direkt auf der Verschlussplatte 4 wie auch auf der Anlagefläche des Bremssattels 1 aufliegt. In diesem Fall weist die Verschlussplatte 4 keine Löcher zur Durchführung der Schrauben 8 auf.

## Patentansprüche

1. Scheibenbremse für ein Nutzfahrzeug, mit einem Bremssattel (1), der eine durch eine abgedichtet anliegende, stoffschlüssig damit verbundene Verschlussplatte (4) verschlossene Aufnahmekammer (2) für eine Zuspanneinrichtung aufweist, wobei die Zuspanneinrichtung mit einer mittels eines Bremshebels und durch eine Druckfeder (6) belasteten, relativ zur Verschlussplatte (4) verschiebbaren Traverse versehen ist, in der mindestens ein Bremsstempel gelagert ist, der eine Durchgangsöffnung (7) der Verschlussplatte (4) durchtritt, an der mit einem Endbereich ein die Durchgangsöffnung (7) randseitig abdichtender Faltenbalg (3) gehalten ist, der andererseits mit dem Bremsstempel verbunden ist, **dadurch gekennzeichnet, dass** die Verschlussplatte (4) zumindest im Anlagebereich der Druckfeder (6) ein Verstärkungselement (10) im Sinne einer Aufdoppelung aufweist.

2. Scheibenbremse nach Anspruch 1, **dadurch gekennzeichnet, dass** die Verschlussplatte (4) mit dem Bremssattel (1) verklebt ist.

3. Scheibenbremse nach Anspruch 1 oder 2, **dadurch gekennzeichnet, dass** die Verschlussplatte (4) am äußeren Randbereich einen umlaufenden Klebwulst (9) aufweist.

4. Scheibenbremse nach einem der vorhergehenden Ansprüche, **dadurch gekennzeichnet, dass** die Verschlussplatte (4) vollflächig mit dem Bremssattel (1) verklebt ist.

5. Scheibenbremse nach einem der Ansprüche 3 oder 4, **dadurch gekennzeichnet, dass** der Klebwulst (9) in einer Nut des Bremssattels (1) einliegt.

6. Scheibenbremse nach einem der vorhergehenden Ansprüche, **dadurch gekennzeichnet, dass** das Verstärkungselement (10) aus Blech besteht.

7. Scheibenbremse nach einem der vorhergehenden Ansprüche, **dadurch gekennzeichnet, dass** das Verstärkungselement (10) mit dem Bremssattel (1) verschraubt ist.

8. Scheibenbremse nach einem der vorhergehenden Ansprüche, **dadurch gekennzeichnet, dass** das Verstärkungselement (10) auf der der Aufnahmekammer (2) gegenüberliegenden Außenseite der Verschlussplatte (4) vorgesehen ist.

9. Scheibenbremse nach einem der vorhergehenden Ansprüche, **dadurch gekennzeichnet, dass** das Verstärkungselement (10) planeben ist.

10. Scheibenbremse nach einem der vorhergehenden Ansprüche, **dadurch gekennzeichnet, dass** die Verschlussplatte (4) in einer Vertiefung des Bremssattels (1) einliegt, wobei das Verstärkungselement (10) direkt auf der Verschlussplatte (4) und einem der Montageöffnung (3) der Aufnahmekammer (2) begrenzenden Randbereich des Bremssattels (1) aufliegt.

## Claims

1. Disc brake for a utility vehicle, with a brake caliper (1) which comprises a accommodation chamber (2) for a brake application device, said chamber being closed by a closure plate (4) in sealing contact therewith and connected thereto by a material-merged connection, wherein the application device is provided with a cross-piece that can be displaced relative to the closure plate (4) and is loaded by means of a brake lever and by a compression spring (6), in which at least one brake piston is fitted, which extends through a through-going opening (7) in the closure plate (4), on which a bellows (3) that seals the opening (7) around its edge is held at one end, while on the other side the bellows is connected to the brake piston, **characterised in that** at least in the area with which the compression spring (6) is in contact the closure plate (4) has a reinforcing element (10) in the sense of a doubled thickness.

2. Disc brake according to Claim 1, **characterised in that** the closure plate (4) is bonded to the brake caliper (1).

3. Disc brake according to Claims 1 or 2, **characterised in that** in its outer edge area the closure plate (4) has an all-round bonding bead (9).

4. Disc brake according to any of the preceding claims, **characterised in that** the closure plate (4) is bonded to the brake caliper (1) all over its surface.

5. Disc brake according to either of Claims 3 or 4, **characterised in that** the bonding bead (9) is set into a groove of the brake caliper (1).

6. Disc brake according to any of the preceding claims, **characterised in that** the reinforcing element (10) consists of sheet metal.

7. Disc brake according to any of the preceding claims, **characterised in that** the reinforcing element (10) is bolted to the brake caliper (1).

8. Disc brake according to any of the preceding claims, **characterised in that** the reinforcing element (10) is provided on the outside of the closure plate (4) opposite the accommodation chamber (2).

9. Disc brake according to any of the preceding claims, **characterised in that** the reinforcing element (10) is flat and even.

10. Disc brake according to any of the preceding claims, **characterised in that** the closure plate (4) is set into a recess of the brake caliper (1), and the reinforcing element (10) is directly in contact with the closure plate (4) and an edge area of the brake caliper (1) that delimits the assembly opening (3) of the accommodation chamber (2).

## Revendications

1. Frein à disque d'un véhicule utilitaire, comprenant un étrier (1) de frein, qui a, pour un dispositif de serrage, une chambre (2) de réception fermée par une plaque (4) de fermeture s'appliquant de manière étanche et reliée ainsi à coopération de matière, le dispositif de serrage étant pourvu d'une traverse soumise au moyen d'un levier de frein à un ressort (6) de compression et coulissant par rapport à la plaque (4) de fermeture, traverse dans laquelle est monté au moins un piston de frein, qui passe dans une ouverture (7) de passage de la plaque (4) de fermeture, à laquelle est retenu, par une partie d'extrémité, un soufflet (3) à plis, rendant étanche du côté du bord l'ouverture (7) de passage, qui, d'autre part, est relié au piston de frein, **caractérisé en ce que** la plaque (4) de fermeture a, au moins dans une partie d'application du ressort (6) de compression, un élément (10) de renfort au sens d'un doublage.

2. Frein à disque suivant la revendication 1, **caractérisé en ce que** la plaque (4) de fermeture est collée à l'étrier (1) de frein.

3. Frein à disque suivant la revendication 1 ou 2, **caractérisé en ce que** la plaque (4) de fermeture a un bourrelet (9) de colle faisant le tour sur la partie de bord extérieure.

4. Frein à disque suivant l'une des revendications précédentes, **caractérisé en ce que** la plaque (4) de fermeture est collée sur toute la surface à l'étrier (1) de frein.

5. Frein à disque suivant l'une des revendications 3 ou 4, **caractérisé en ce que** le bourrelet (9) de colle entre dans une rainure de l'étrier (1) de frein.

6. Frein à disque suivant l'une des revendications précédentes, **caractérisé en ce que** l'élément (10) de renfort est en tôle.

7. Frein à disque suivant l'une des revendications précédentes, **caractérisé en ce que** l'élément (1) de renfort est vissé à l'étrier (1) de frein.

8. Frein à disque suivant l'une des revendications précédentes, **caractérisé en ce que** l'élément (10) de renfort est prévu sur la face, opposée à la chambre (2) de réception, de la plaque de fermeture.

9. Frein à disque suivant l'une des revendications précédentes, **caractérisé en ce que** l'élément (10) de renfort est plan.

10. Frein à disque suivant l'une des revendications précédentes, **caractérisé en ce que** la plaque (4) de fermeture entre dans un évidement de l'étrier (1) de frein, l'élément (10) de renfort s'appliquant directement sur la plaque (4) de fermeture et sur une partie de bord, délimitant l'ouverture (3) de montage de la chambre (2) de réception, de l'étrier (1) de frein.
